# EUROPEAN PATENT APPLICATION

(11) **EP 1 647 463 A2**
(43) Date of publication of application: **19.04.2006**
(21) Application number: 05256205.5
(22) Date of filing: 04.10.2005
(51) Int. Cl.: B62B 7/06, A61G 5/08

(54) **Pushchair**

(30) Priority: 15.10.2004 GB 0422967
(71) Applicant: Kwan Kwai Wun, Tony, Hong Kong (HK)
(72) Inventor: Kwan Kwai Wun, Tony, Hong Kong (HK)
(74) Representative: Hedges, Martin Nicholas

(57) **Abstract**

A collapsible mobile chair assembly comprises a frame having a pair of axially aligned wheel axles 6, 7 extending from opposing sides of the frame, each axle 6, 7 having a rack gearing 40, 41 and being slidably mounted in said frame for axial moveable between an operating position in which it extends from and a storage position in which it is retracted into said frame. The rack gearing 40, 41 of the two axles 6, 7 overlap, extending on either side of and drivingly engaging a pinion gear 42 provided on the frame, thereby constraining the axles 6, 7 slidingly to move together in opposite directions. The assembly further includes two support plate assemblies 10, 11, one provided on each side of the chair, a rear fork assembly 12, 13 extending from each support plate assembly 10, 11, and a front fork strut 5a, 5b pivotally attached to each support plate 10, 11 for movement between an extended operational position and a retracted storage position. A handle strut 15a, 15b is pivotally attached to each support plate 10, 11 for movement between an extended operational position and a retracted storage position, each of said front fork struts 5a, 5b and said handle struts 15a, 15b having a gearing 22, 23 formed thereon, the gearing of the front fork struts 5a, 5b being respectively attached to said support plates 10, 11 and respectively engaging with the gearing of the handle struts 15a, 15b such that the handle strut and front fork strut associated with each support plate are constrained to rotate together between their extended and their retracted positions.

## Description

The present invention relates to wheeled chair frames such as pushchair frames of the type which fold up for compact storage.

It is well known to make pushchairs, wheel chairs and the like foldable both for compact storage for example in the home as well as to enable them easily to be stowed, for example, in the boot of a car for easy transport. This is typically achieved by providing a frame assembly having wheels and a handle on which is removably mountable a chair assembly. In this way, the chair can be stored separately from the frame. Furthermore, by provision of suitable hinge joints, the frames of known pushchairs etc can be made to collapse into a more compact shape, for example by folding the handle portion against the main body of the frame. However, such known folding pushchairs and the like have the drawback that they are complicate to fold up and reassemble due to the requirement to operate a number of release catches and fold a number of different parts separately to each other, making the operation of folding and unfolding time consuming and cumbersome.

According to a first aspect of the present invention there is provided a collapsible mobile chair assembly comprising a frame having at least one pair of wheel axles substantially axially aligned with each other and extending from opposing sides of the frame, each axle being slidably mounted in said frame so as to be axially moveable between an operating position in which it extends from frame and a storage position in which it is substantially retracted into said frame, and each axle of said pair axially overlapping the other axial of said pair and having a gearing formed on their overlapping portions, a gear being provided on said frame which simultaneously engages the gearing formed on both axles of said pair so as to constrain said axles slidingly to move in equal and opposite directions.

A mobile chair assembly according to the invention has the advantage that the wheels mounted on said axles can easily be retracted so as to shorten the width of the chair for compact storage.

Preferably, the gearing formed on each of said axles is a rack gear, said gearing being provided on surfaces of the two axles which face each other, and the gearing on the frame is a pinion gear. Other forms of gearing such as a worm gear are also possible however. In one embodiment, frame includes an axle tube from which the axles extend, the gearing being housed within the tube.

In a particularly preferred embodiment, cables are attached to at least one of the axles, which operate automatically to extend and retract the axles when the frame is moved from a collapsed to an erect position. More particularly, a first cable is attached to an inner end of one of the axles and a second cable is attached to an intermediate point of the said one of the axles, said first cable being tensions and the second cable slackened as the frame is moved towards a collapsed position so as to retract the axles for compact storage, and vice versa when the frame is moved towards an erect position so as to extend the axles for operation. Since the axles are constrained to move together by the gearing, cables are required to be connected to only one of the axles, although they can be provided on both if deemed necessary. The cables are preferably attached at their other ends remote from the axle, to portions of the frame which move during collapse and assembly, such that the anchor points of said other ends move closer to and away from the axles in order to effect said tensioning and slackening of the cables.

Preferably, the chair assembly has a pair of rear wheels, one attached to each of said pair of axles, and a single front wheel mounted on a front fork assembly such that the wheels are arranged in a substantially triangular configuration.

However, the chair may instead have four wheels arranged on two pairs of axles, each pair of axles being retractable and extendable as defined above and described hereinafter.

According to a second aspect of the present invention, there is provided a collapsible mobile chair assembly comprising a pair of support plate assemblies one provided on each side of the chair, a rear fork assembly extending from each support plate assembly, a front fork strut pivotally attached to each support plate for movement between an extended operational position and a retracted storage position, and a handle strut pivotally attached to each support plate for movement between an extended operational position and a retracted storage position, each of said front fork struts and said handle struts having a gearing formed thereon, the gearing of the front fork strut attached to each of said support plates engaging with the gearing of the handle strut attached to said support plate such that the handle strut and front fork strut associated with each support plate are constrained to rotate together between their extended and their retracted positions, and locking means operable to retain said front fork and handle struts in their extended positions.

The collapsible chair assembly according to the second aspect of the invention has the advantage that it provides a simple mechanism by which the frame can be collapsed by just a single user.

Preferably, each of the front fork and handle struts have a sleeve formed on their end which is pivotally attached to the support plate assembly, said gearing being formed on an outer curved periphery of each said sleeve.

Preferably, the two front fork struts are formed by the ends of a substantially U shaped front fork, to the centre of which is mounted a front wheel. Similarly, the two handle struts are preferably formed by the ends of a substantially U shaped handle frame. Said handle frame and front fork preferably extend from the support plate assemblies substantially co-planar with each other and in opposite directions, the handle frame and front fork rotating in opposite directions as the frame is collapsed to move towards each other until they extend substantially parallel to each other and to the rear fork assemblies.

The locking means advantageously takes the form of at least one pin carried on one of the front fork and handle struts which lockingly engages with the support plate assembly on at least one side of the frame. More particularly, at least one retractable pin, in particular which extends laterally through one of the struts and is slidable longitudinally therealong, is provided which engages in a slot formed in one of the support plates. In a particularly advantageous embodiment, each of the handle struts has a laterally extending, longitudinally moveable pin which is engageable in a slot formed in its associated support plate in order to lock the frame in its erect position. Biasing means such as a spring may be associated with each pin which operate to urge each pin into a first longitudinal position within the slot which is remote from a slot opening through which the pin can be removed from the slot, the pins being retractable against the biasing action of their associated spring to a position in which each pin aligns with an opening in its associated slot, thereby enabling the pin to be removed from the slot and hence freeing the handle and front fork to be rotated to their collapsed positions. The opening in each slot is advantageously formed by a second slot which extends substantially perpendicularly from said slot and tapers outwardly as it extends from the slot so as to present a wide mouth for capturing the associated pin as the handle is moved back towards its erect position. One side of the second slot is particularly advantageously formed as a camming surface which engages the pin and urges it to retract against the biasing action of its associated spring as the handle approaches its erect position, thereby guiding the pin into the locking slot. A release sleeve may advantageously be attached to each said pin which may be operated by a user to move the pin against the biasing force of the spring when releasing the handle for storage.

Preferably, each support plate assembly comprises a pair of support plates which are positioned in spaced apart relationship so as to sandwich the associated front fork strut, handle strut and rear fork assembly therebetween. The locking pin carried on each of said handle struts then operates to engage both plates of each support plate assembly, in particular opposing ends of the pin engage in a slot formed in each plate of the assembly.

In a particularly preferred embodiment, a collapsible mobile chair assembly is provided which includes the features of both the first and second aspects of the invention, with, in particular, cables being connected between the handle/ front fork struts and the rear axles such that the movement of the handle and front fork between their collapsed and erect positions automatically effects movement of the axles between their retracted and extended positions.

In order that the invention may be well understood, there will now be described an embodiment thereof, given by way of example, reference being made to the accompanying drawings, in which:
Figure 1 is a side view of a pushchair frame embodying the invention in its erect position;
Figure 2 is a side view of the pushchair of Figure 1 in its collapsed position;
Figure 3 is a front view of the pushchair of Figure 1 in its erect position;
Figure 4 is a detail side view of a gearing mechanism coupling movement of a handle with movement of a front fork of the pushchair of Figure 1;
Figure 5 is detail top view of the gearing mechanism of Figure 4;
Figure 6 is a side view of a locking plate which interacts with the gearing mechanism of Figure 4;
Figure 7 is an enlarged view of the gearing mechanism and locking plate of Figures 4 to 6;
Figure 8 is a side view of a rack and pinion system formed on overlapping ends of rear wheel axles of the pushchair of Figure 1;
Figure 9 is an enlarged, partially sectional view of the rear wheels of the pushchair of Figure 1 in their extended position;
Figure 10 is an enlarged, partially sectional view of the rear wheels of Figure 9 in their retracted position; and

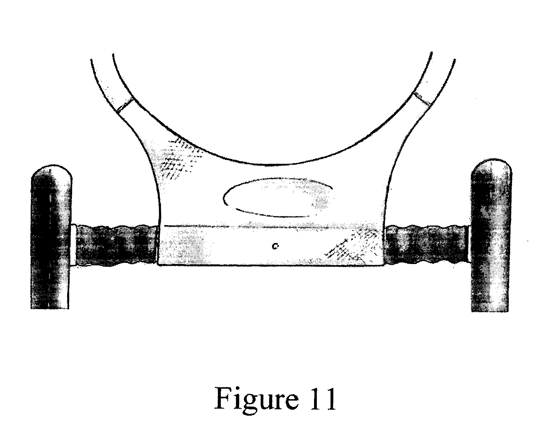

Figure 11 is an enlarged view of the rear wheel so of Figure 9 with finishing panels fitted thereon.

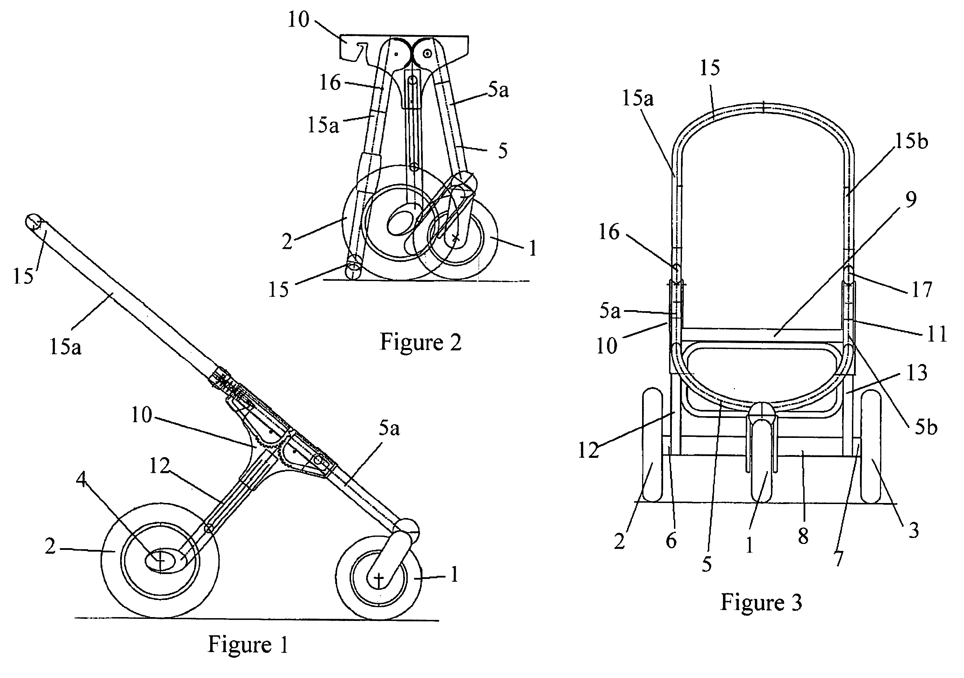

Referring first to Figure 1, there is shown a three wheeled folding pushchair frame according to the invention having a single, central front wheel 1 and a pair of rear wheels 2, 3 positioned for rotation about a common axis 4. The front wheel 1 is mounted on a front fork 5 which, as shown in Figure 3, is substantially U-shaped with the front wheel 1 being connected to the bottom of the U and the two sides 5a, 5b extending therefrom in a rearwards direction upwards at an inclined angle along either side of the pushchair, each side 5a, 5b connecting to one of a pair of central plate assemblies 10, 11 which are located on each side of the pushchair. A central cross bar 9 extends between the central plate assemblies 10, 11 for strengthening the assembly. The rear wheels 2, 3 are each rotatably mounted on an axle 6, 7 which extend substantially co-axially with each other and extend from either side of a rear axle tube 8. The rear axle tube 8 is, in turn, connected at either side to the central plate assemblies 10, 11 by a pair of rear forks 12, 13 which extend from opposing end of the axle tube 8 forwards at an inclined angle and are fastened to a respective one of the central plate assemblies 10, 11 so as to be rigidly connected thereto.

The frame further includes a substantially U-shaped handle 15, each end 16, 17 of which is attached to a respective one of the central plate assemblies 10, 11 such that in the erect position, each arm 15a, 15b of the handle extends from its respective central plate assembly 10, 11 rearwards at an inclined angle and in substantially the same plane as the front fork 5.

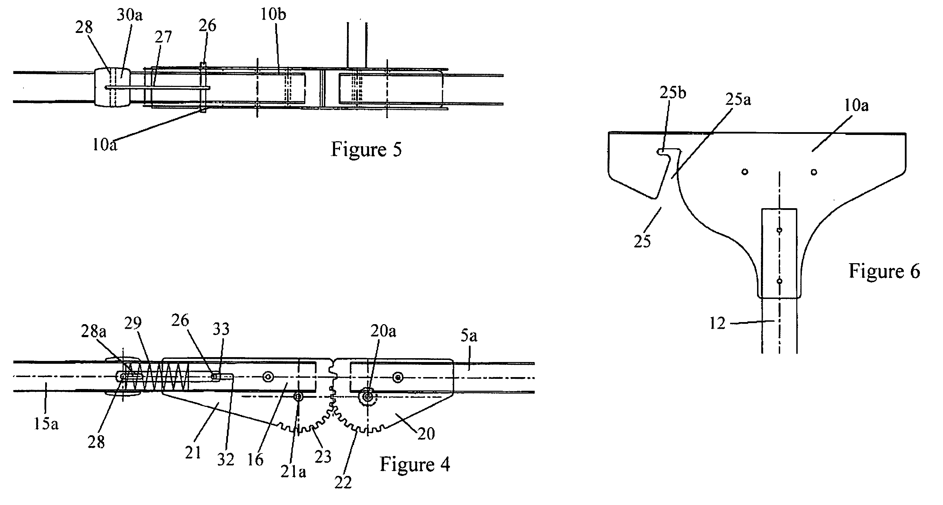

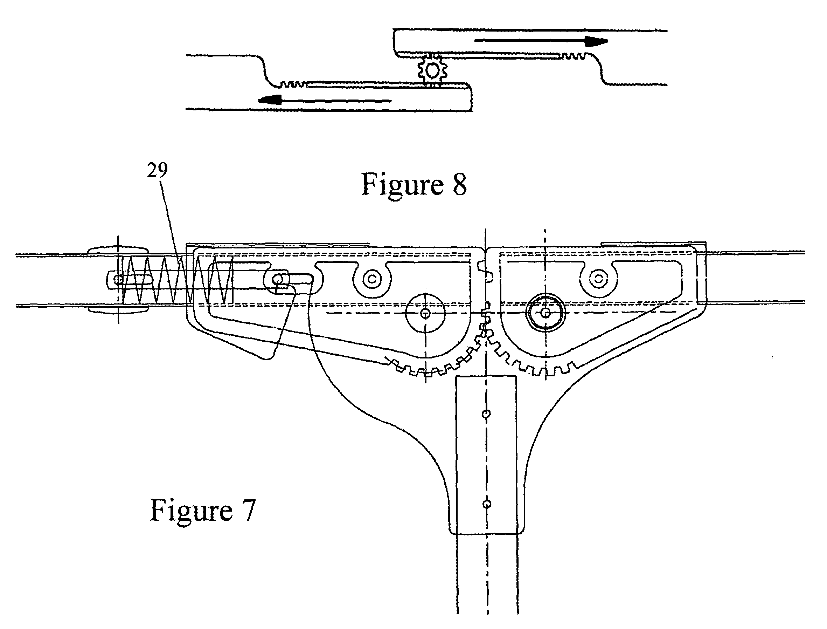

Referring now to figures 4 to 7, one of the central plate assembly 10, 11 and the mating ends of the front fork 5, the associated rear fork 12, 13 and the handle 15 are shown in more detail. The central plate assembly 10 is actually formed by a pair 10a, 10b of generally T-shaped plates with the end of the rear fork 12 extending between the two plates 10a, 10b along and being firmly attached to the shaft of the 'T', for example by riveting or the like. Securely mounted on the end of each of the side arm 5a of the front fork 5 and arm 15a of the handle 15 is a sleeve 20, 21. As clearly shown in Figure 7, each sleeve 20, 21, has a gearing 22, 23 formed in its outer surface and the two sleeves 20, 21 are sandwiched between each rotatably fastened to the central plates 10a, 10b for rotation about a respective axis 20a, 21a, which axes 20a, 21a are spaced apart from each other by a distance such that the gearing 22, 23 on the two sleeves 20, 21 are in meshing engagement and hence the two sleeves 20, 21 with them the front fork 5 and the handle 15 on which they are carried, are constrained to rotate together relative to the central plate assembly 10 in opposite directions. The sleeves 20, 21 are preferably fastened onto the front fork 5 and handle 15 respectively by rivets which pass through the sleeve and the portion of the front fork or handle housed therein. Similarly, the sleeves 20, 21 are each preferably connected to the central plate 10 by means of a rivet which extends through from outside one of the central plates 10a, through respective sleeve 20, 21 and through the other central plate 10b. A bearing may optionally be provided within the through opening in the sleeves 20, 21 to facilitate rotations, and it will be understood that the aforementioned rivets maybe replaced with nuts and bolts, screws or the like.

As shown in Figure 4, the end of the front fork and handle is offset from the axis of rotation 20a, 21a of its associated sleeve 20, 21 with the central plate assembly 10, in particular above the axis of rotation such that when the sleeves rotate to collapsed the front fork and handle downwards towards each other, a minimum spacing is maintained between the ends.

An axially extending slot 32 is formed in each side 15a, 15b of the handle proximate to the ends 16, 17, and a complementary shaped slot 33 is formed in the handle sleeve 21 associated with each end 16, 17, the slots 32, 33 being positions such that they align with each other when the sleeve 21 is fastened to its associate end 16, 17 of the handle 15. A pin 26 is provided in each end 16, 17 of the handle which engages in the slots 32, 33 with its ends projecting beyond the outer periphery of the sleeve 21 and which is slidably moveable along the slots 32, 33. An actuating rod 27 is rigidly connected a one end to the middle of the pin 26 and rigidly connected at the other end to a second pin 28 which extends transversely across the handle 15 at a point which is spaced longitudinally from the sleeve 21, said second pin 28 slidably engaging in opposing longitudinally extending slots 28a formed in the handle 15 so as to be slidably moveable with the first pin 26 and being secured to a release sleeve 30a, 30b which is slidably mounted on the outside of each side 15a, 15b of the handle. As a result, the first pin 26 is constrained to move longitudinally along the handle 15 with its associated release sleeve 30a, 30b. A compression spring 29 is positioned inside the handle as more clearly shown in Figure 7 with one end bearing against the second pin 28 and the other engaging a shoulder formed on the inner cylindrical wall of the arm, such that the spring 29 biases the second pin 28 into engagement with the end of the slot 28a which is remote from the handle sleeve 21 and hence also the first pin 26 into engagement with the ends of the slots 32, 33 which are remote from the handle sleeve 21.

A capture slot 25 is also provided in each of the central plates 10a, 10b, 11a, 11b. Each capture slot 25 is composed of a first arcuate section 25a which extends upwards from the bottom flank of the plate 10a towards the top cross flank, and a second straight section 25b which extends substantially perpendicularly to the first section 25a and, when the handle is in its erect position, extends parallel to and is substantially aligned with the slots 32, 33 formed in the sleeve 21 and the end 16 of the handle. The second section 25b of the capture slot has a width which is a clearance fit with the outer periphery of the first pin carried on each end 16, 17 such that the first pin may slide easily axially along said second section 25b, whilst the first section, which extends from the end of the second section 25b which is proximate to the end 16 of the handle, is defined on one side which is remote from the end 16 of the handle by a straight edge which is inclined away from the first end 16 of the handle, and on the other side by a, arcuate edge. In this way, the width of the first section 25a widens towards the mouth of the capture slot.

The configuration of the handle, central plates and front fork on only one side of the assembly has been described. However, it will be understood that other side has an identical configuration.

When the frame is in its erect position as shown in Figure 1 with the handle 15 and front forks 5 extending away from the central plates substantially parallel to each other, the first pin 26 extending laterally from each side 15a, 15b of the handle 15 engages in the second section 25b of the capture slot 25 formed in the capture plate 10a, 10b, 11a, 11b on either side of each end 16, 17 of the handle, and the biasing spring 28 associated with each said first pin 26 acts to urge each said first pin 26 axially along said second section 25b and away from the intersection with the first section 25a of the capture slot 25. As a result, the handle is prevented from pivoting relative to the capture plates and is hence locked in its erect position. Since the handle and front fork are constrained to move together due to the meshing engagement of their gear teeth, locking of the handle in its erect position similar locks the from fork in its erect position.

In order to collapse the handle and front fork, the operator slides the release sleeve 30a, 30b on each side 15a, 15b of the handle 15 towards the capture plate assembly 10, 11 against the biasing force of the springs 29. Through the connecting rods 27, this causes the first pin 26 on each side to move along the second section 25b of the capture slot 25 to the intersection with the first section 25a of the capture slot 25, at which point the pins 26 are released to drop out of their associated second sections 25b and to travel along the first sections 25a, and hence the sides 15a, 15b of the handle are released to rotation relative to the central plate assemblies 10, 11 towards the collapsed position shown in Figure 2. This rotation of the handles also causes the front fork 5 to rotate relative to the central plate assemblies 10, 11 in the opposite direction to the handle due to the meshing of the gear teeth 22, 23 and hence the front fork and handle rotate towards each other and into their collapsed position shown in Figure 2.

In order to return the assembly to its erect position, the handle 15 is rotated clockwise in Figure 2 away from the front fork 5 and back towards its erect position, the front fork being caused by the meshing gears similarly to rotate, in an anti-clockwise direction in Figure 2. As the handle approaches the central plate assemblies 10, 11, each end the first pin 26 aligns with the mouth of the first section 25a of the capture slot 25 of its associated plate 10a, 10b, 11a, 11b and engages against the inclined edge thereof. Continued movement of the handle 15 towards its fully erect position develops a camming action between each end of each first pin 26 and the inclined edge of the first section 25a, causing the pins to slide axially along the slots 32, 33 in the handle 15 and sleeve 21, against the biasing force of the springs 29 and hence guiding the pins 26 towards the intersection of the first and second sections of the capture slots 25. The handle 15 reaches its fully erect position as the ends of the pins 26 reach the second section 25b of the capture slot 25, whereupon the biasing force of the springs causes the pins 26 to move axially along the second section 25b away from the first section thereby locking the handle and hence the front fork back in its erect position.

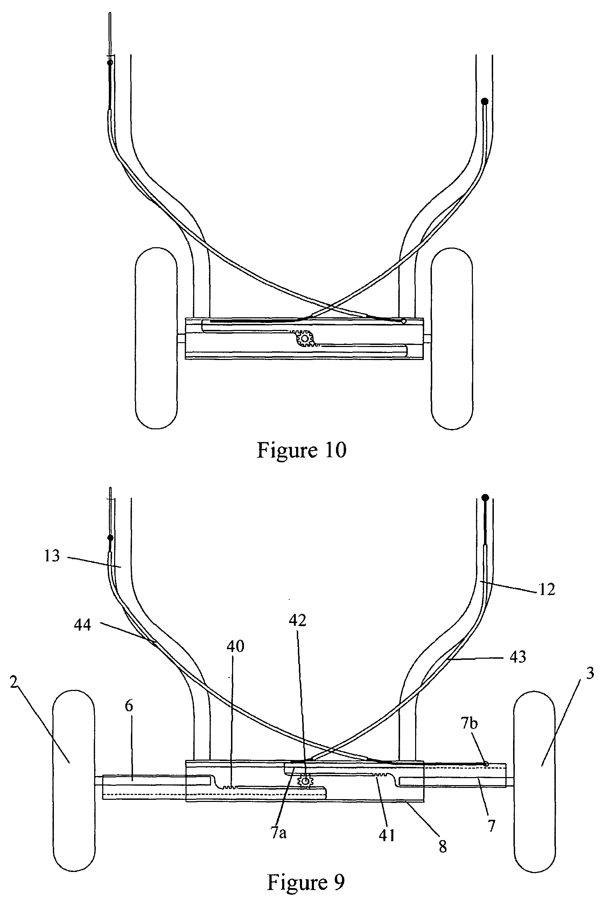

As shown in Figure 9, the rear wheel axles 6, 7 are formed separately of each other and each has a rack gear 40, 41 formed thereon, the two axles axially overlapping each other with their rack gears facing each other as shown in Figure 9. Furthermore, each axial 6, 7 is slidably mounted in the rear axle tube 8 so as to be axially extendable from a retracted position as shown in Figure 10 to an extended position shown in Figure 9. A pin 42 is mounted in the axle tube 8 between and in engagement with both the rack gears 40, 41 so that the two axles 6, 7 are constrained to move axially together in equal and opposition directions.

A pair of push/pull cables 44, 45 are secure to one of the axles 7, the right hand axle as illustrated in Figure 9, the first cable 44 being attached to a point 7a proximate to the inner end of the axle 7 which is remote from the wheel 3 carried thereon and extending from there into the left rear fork 13 as illustrated in Figures 9 and 10, and the second cable 45 being attached to attached to axle 7 at a point 7b which is spaced axially apart from said inner end, in particular which is substantially midway between said inner end 7a and the attached wheel 3, said second cable extending from the second point 7b into the right rear fork 12 as illustrated in Figure 9. Each of the cables 44, 45 extend through their respective rear fork 12, 13 and attach to a point on the handle or the front fork such that when the assembly is moved towards the collapsed position, the first cable 44 is pull whilst the second cable 45 is slackened, and when the assembly is moved from its collapsed position back towards its erect position, the first cable is slackened whilst the second cable 45 is pulled. When the first cable 44 is pulled, the second axle 7 is drawn into the axle tube 8 and the wheel 3 attached thereto is retracted towards the frame. The action of the pinion 42 also causes equal and opposite movement of the first axle 6, causing it also to retract into the tube 8 for compact storage. When the second cable 45 is pulled, the second axle 45 is cause to slide to the right in Figure 9 and the wheel attached thereto is extended from the tube 8 to its operating position. At the same time, the pinion 42 causes the first axle 44 similarly to extend to its operating position.

A Flexible axle boot is preferably provided between each wheel and the axles tube 8 so as to conceal and protect the rack mouldings on the axles.

## Claims

1. A collapsible mobile chair assembly comprising a frame having at least one pair of wheel axles (6, 7) substantially axially aligned with each other and extending from opposing sides of the frame, each axle (6, 7) being slidably mounted in said frame so as to be axially moveable between an operating position in which it extends from frame and a storage position in which it is substantially retracted into said frame, and each axle (6, 7) of said pair axially overlapping the other axial of said pair and having a gearing (40, 41) formed on their overlapping portions, a gear (42) being provided on said frame which simultaneously engages the gearing (40, 41) formed on both axles of said pair so as to constrain said axles (6, 7) slidingly to move together in opposite directions.

2. A collapsible mobile chair assembly according to claim 1, wherein the gearing (40, 41) formed on each of said axles (6, 7) is a rack gear, said gearing being provided on surfaces of the two axles (6, 7) which face each other, and wherein the gear (42) on the frame is a pinion gear.

3. A collapsible mobile chair assembly according to claim 1 or claim 2, wherein cables (44, 45) are attached to at least one of the axles (6, 7), which operate automatically to extend and retract the axles (6, 7) when the frame is moved from a collapsed to an erect position.

4. A collapsible mobile chair assembly according to claim 3, wherein a first cable (44) is attached to an inner end of one of the axles (7) and a second cable (45) is attached to an intermediate point of the said one of the axles (7), said first cable (44) being tensioned and the second cable (45) slackened as the frame is moved towards a collapsed position so as to retract the axles (6, 7) for compact storage, and said first cable (44) being slackened and the second cable (45) tensioned as the frame is moved towards an erect position so as to extend the axles (6, 7) for operation; the cables (44, 45) preferably being attached at their other ends remote from the axle (7) to portions of the frame which move during collapse and assembly, such that the anchor points of said other ends move closer to and away from the axles (6, 7) in order to effect said tensioning and slackening of the cables (44, 45).

5. A collapsible mobile chair assembly according to any of the preceding claims, wherein the chair assembly has a pair of rear wheels (2, 3), one attached to each of said pair of axles (6, 7), and a single front wheel (1) mounted on a front fork assembly (5) such that the wheels (1, 2, 3) are arranged in a substantially triangular configuration.

6. A collapsible mobile chair assembly comprising a pair of support plate assemblies (10, 11), one provided on each side of the chair, a rear fork assembly (12, 13) extending from each support plate assembly (10, 11), a front fork strut (5a, 5b) pivotally attached to each support plate (10, 11) for movement between an extended operational position and a retracted storage position, and a handle strut (15a, 15b) pivotally attached to each support plate (10, 11) for movement between an extended operational position and a retracted storage position, each of said front fork struts (5a, 5b) and said handle struts (15a, 15b) having a gearing (22, 23) formed thereon, the gearing (22) of the front fork strut (5a, 5b) attached to each of said support plate assemblies (10, 11) engaging with the gearing (23) of the handle strut (15a, 15b) attached to said support plate assembly (10, 11) such that the handle strut (15a, 15b) and front fork strut (5a, 5b) associated with each support plate (10, 11) are constrained to rotate together between their extended and their retracted positions, and locking means operable to retain said front fork and handle struts in their extended positions.

7. A collapsible mobile chair assembly according to claim 6, wherein each of the front fork and handle struts (5a, 5b, 15a, 15b) have a sleeve (20, 21) formed on their end which is pivotally attached to the support plate assembly (10, 11), said gearing (22, 23) being formed on an outer curved periphery of each said sleeve (20, 21).

8. A collapsible mobile chair assembly according to claim 6 or claim 7, wherein the two front fork struts (5a, 5b) are formed by the ends of a substantially U shaped front fork (5), to the centre of which is mounted a front wheel (1); and/or wherein the two handle struts (15a, 15b) are formed by the ends of a substantially U shaped handle frame (15).

9. A collapsible mobile chair assembly according to claim 8, wherein said handle frame (15) and front fork (5) extend from the support plate assemblies (10, 11) substantially co-planar with each other and in opposite directions, the handle frame (15) and front fork (5) rotating in opposite directions as the frame is collapsed to move towards each other until they extend substantially parallel to each other and to the rear fork assemblies (12, 13).

10. A collapsible mobile chair assembly according to any of claims 6 to 9, wherein the locking means takes the form of at least one pin (26) carried on one of the front fork and handle struts (5a, 5b, 15a, 15b) which lockingly engages with the support plate assembly (10, 11) on at least one side of the frame; the or each locking pin (26) preferably being a retractable pin, which extends laterally through one of the struts (5a, 5b, 15a, 15b) and is slidable longitudinally therealong, and which engages in a slot (32, 22) formed in one of the support plates (10, 11).

11. A collapsible mobile chair assembly according to claim 10, wherein each of the handle struts (15a, 15b) has a laterally extending, longitudinally moveable pin (26) which is engageable in a slot (25) formed in its associated support plate (10, 11) in order to lock the frame in its erect position.

12. A collapsible mobile chair assembly according to claim 10 or claim 11, further including biasing means (29) associated with each pin (26), each said biasing means (29) operating to urge its associated pin (26) into a first longitudinal position within the slot (25) which is remote from a slot opening (25a) through which the pin (26) can be removed from the slot (25), each pin (26) being retractable against the biasing action of its associated biasing means (29) to a position in which each pin (26) aligns with an opening in its associated slot (25), thereby enabling the pin (26) to be removed from the slot (25) and hence freeing the handle (15) and front fork (5) to be rotated to their collapsed positions; the opening in each slot (25b) preferably formed by a second slot (25a) which extends substantially perpendicularly from said slot (25b) and tapers outwardly as it extends from the slot (25b) so as to present a wide mouth for capturing the associated pin (26) as the handle (15) is moved back towards its erect position; one side of the second slot (25a) preferably being formed as a camming surface which engages the pin (26) and urges it to retract against the biasing action of its associated biasing means (29) as the handle (15) approaches its erect position, thereby guiding the pin (26) into the locking slot (25b).

13. A collapsible mobile chair assembly according to any of claims 12, further including a release sleeve (30a, 30b) attached to each said pin (26) which is operable by a user to move the pin (26) against the biasing force of the biasing means (29) when releasing the handle (15) for storage.

14. A collapsible mobile chair assembly according to any of claims 6 to 13, wherein each support plate assembly (10, 11) comprises a pair of support plates which are positioned in spaced apart relationship so as to sandwich the associated front fork strut (5a; 5b), handle strut (15a; 15b) and rear fork assembly (12; 13) therebetween.

15. A collapsible mobile chair assembly according to any of claims 6 to 14, further including the additional features according to any of claims 1 to 5.
